# EUROPÄISCHE PATENTANMELDUNG

(11) **EP 3 315 820 A1**
(43) Veröffentlichungstag der Anmeldung: **02.05.2018**
(21) Anmeldenummer: 16195980.4
(22) Anmeldetag: 27.10.2016
(51) Int. Cl.: F16H 57/08, F16H 57/04, F03D 80/70, F03D 15/00

(54) **PLANETENGETRIEBE, WINDKRAFTANLAGE MIT PLANETENGETRIEBE UND VERFAHREN ZUM BETRIEB EINES PLANETENGETRIEBES**

(71) Anmelder: Flender GmbH, 46395 Bocholt (DE)
(72) Erfinder: Bieder, Christian, 46499 Hamminkeln (DE); Gettler, Ralf, 46325 Borken (DE); Janßen, Kathrin, 46514 Schermbeck (DE)
(74) Vertreter: Maier, Daniel Oliver

(57) **Zusammenfassung**

Die Erfindung ist ein Planetengetriebe (12) mit zumindest einem drehbaren Teil (10) und dem drehbaren Teil (10) zugeordneten Mitteln (14, 16, 18) zur Aufnahme von Schmiermittel (20) aus einem Aufnahmebereich (22) und zur Abgabe des aufgenommenen Schmiermittels (20) in einem Abgabebereich (24) am drehbaren Teil (10), wobei als Mittel (14, 16, 18) zur Aufnahme des Schmiermittels (20) eine mittels einer Deckplatte (16) abgedeckte Ausnehmung (14) in dem drehbaren Teil (10) fungiert, wobei die Ausnehmung (14) über eine Öffnung (18) in der Deckplatte (16) nach außen offen ist und wobei eine Fläche der Öffnung (18) kleiner als eine Grundfläche der Ausnehmung (14) ist, sowie eine Windkraftanlage mit einem solchen Planetengetriebe (12) und ein Verfahren zum Betrieb eines solchen Planetengetriebes (12).

## Beschreibung

Die Erfindung betrifft ein Planetengetriebe, insbesondere ein Planetengetriebe für eine Windkraftanlage. Grundsätzlich kommt die Erfindung aber auch für andere Getriebeformen und für Anwendungsfälle über eine Verwendung in einer Windkraftanlage hinaus in Betracht.

Grundsätzlich besteht bei drehenden Systemen, zum Beispiel einem Planetengetriebe, das Problem, dass bei Ausfall einer Druckölversorgung einzelne rotierende Teile des drehenden Systems nicht oder nicht ausreichend geschmiert sind.

Eine Aufgabe der vorliegenden Erfindung besteht ausgehend davon darin, eine Lösung anzugeben, die eine solche Schmierung gewährleistet.

Diese Aufgabe wird erfindungsgemäß mittels eines Planetengetriebes mit den Merkmalen des Anspruchs 1 gelöst. Danach ist bei einem Planetengetriebe mit zumindest einem drehbaren Teil und dem drehbaren Teil zugeordneten Mitteln zur Aufnahme von Schmiermittel aus einem Aufnahmebereich und zur Abgabe des aufgenommenen Schmiermittels in einem Abgabebereich vorgesehen, dass sich der Abgabebereich direkt am drehbaren Teil befindet, also zum Beispiel seitlich an dem drehbaren Teil oder im Innern des drehbaren Teils, dass als Mittel zur Aufnahme des Schmiermittels eine mittels einer Deckplatte abgedeckte Ausnehmung in dem drehbaren Teil fungiert, dass die Ausnehmung über eine Öffnung in der Deckplatte nach außen offen ist und dass eine Fläche der Öffnung kleiner als eine Grundfläche der Ausnehmung ist.

In seinem Oberbegriff geht Anspruch 1 von der DE 10 2011 082 856 A1 aus. Daraus ist ein Planetenträger für ein Planetengetriebe einer Windkraftanlage bekannt, der im eingebauten Zustand um eine Drehachse rotiert und zumindest eine Fördervorrichtung aufweist, welche derart ausgebildet ist, dass sie bei Rotation des Planetenträgers Schmiermittel von einem Aufnahmebereich zu einem Abgabebereich zu fördern vermag. Bei der DE 10 2011 082 856 A1 ist der Abgabebereich eine mittels des Planetengetriebes angetriebene Hochgeschwindigkeitswelle. Zu deren Schmierung wird das Schmiermittel zunächst in einen Sammelbehälter gefördert. An diesen ist eine Leitung angeschlossen, welche zu der tiefer als der Sammelbehälter liegenden Hochgeschwindigkeitswelle führt. Der Abgabebereich befindet sich also entfernt von dem drehbaren Teil, mit dem das Schmiermittel aufgenommen wird.

Der Vorteil der hier vorgeschlagenen Lösung besteht darin, dass auf einfache Art und Weise eine Schmierung des jeweiligen drehbaren/drehenden Teils selbst und/oder eines mit dem drehbaren/drehenden Teil unmittelbar verbundenen weiteren drehbaren/drehenden Teils gewährleistet werden kann. Dies macht bekannte Lösungen, wie zum Beispiel eine mechanische Pumpe, einen Ölabstreifer, Ölwannen oder Öltaschen sowie Ölrinnen oder Ölstaubleche entbehrlich.

Die Möglichkeit, auf eine mechanische Pumpe verzichten zu können, gewährleistet die Verwendbarkeit der hier vorgeschlagenen Lösung auch für den sogenannten Trudelbetrieb einer Windkraftanlage. Beim Trudelbetrieb einer Windkraftanlage wird bekanntlich aufgrund der dann gegebenen geringen Drehzahlen der Rotornabe eine ansonsten gegebene Druckölversorgung ausgeschaltet und ein Ölsumpf des Planetengetriebes der Windkraftanlage mit einem Schmiermittel, insbesondere Getriebeöl, geflutet. Aus diesem Ölsumpf (Aufnahmebereich) nimmt das jeweilige drehbare Teil des Planetengetriebes mit der zumindest einen darin gebildeten Ausnehmung einen Teil des Schmiermittels auf. Das jeweilige drehbare Teil fungiert mit der und/oder jeder weiteren Ausnehmung als Schöpfvorrichtung (Ölschöpfvorrichtung). Beim Weiterdrehen des drehbaren Getriebeteils gewährleisten die Deckplatte über der Ausnehmung und die Platzierung der darin befindlichen Öffnung, dass zumindest ein Teil des in der Ausnehmung ursprünglich aufgenommenen Schmiermittels in der Ausnehmung verbleibt und beim fortgesetzten Weiterdrehen unter Gravitationseinfluss in den Abgabebereich direkt an dem als Ölschöpfvorrichtung fungierenden drehbaren Getriebeteil gelangt.

Bei einem Verfahren zum Betrieb eines Planetengetriebes der hier und im Folgenden beschriebenen Art taucht das drehbare Getriebeteil rotierend abschnittsweise in ein Schmiermittelreservoir im Aufnahmebereich ein, wobei mit dem Eintauchen in das Schmiermittelreservoir Schmiermittel durch die Öffnung in der Deckplatte in das Innere der Ausnehmung im Getriebeteil eintritt, wobei beim anfänglichen Weiterdrehen des Getriebeteils zumindest ein Teil des in das Innere der Ausnehmung eingetretenen Schmiermittels mittels der Deckplatte in der Ausnehmung gehalten wird und wobei beim weiteren Weiterdrehen des Getriebeteils zumindest ein Teil der in der Ausnehmung gehaltenen Schmiermittelmenge in einen von der Ausnehmung abgehenden, zum Abgabebereich weiterführenden Kanal eintritt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Planetengetriebes nicht vorhanden ist. Jede Bezugnahme in der Beschreibung auf Aspekte nachgeordneter Ansprüche ist demnach auch ohne speziellen Hinweis ausdrücklich als Beschreibung optionaler Merkmale zu lesen.

Eine in Umfangsrichtung des drehbaren Getriebeteils mittig in der Deckplatte platzierte Öffnung zu der Ausnehmung macht die Aufnahme von Schmiermittel mittels der Ausnehmung unabhängig von der jeweiligen Drehrichtung des Getriebeteils.

Ein Planetengetriebe oder ein Getriebe allgemeiner Art gemäß dem hier vorgeschlagenen Ansatz kommt zum Beispiel zur Verwendung in einer Windkraftanlage in Betracht. Entsprechend ist die Erfindung auch eine Windkraftanlage mit einem solchen Getriebe, insbesondere einem derartigen Getriebe in Form eines Planetengetriebes.

Nachfolgend werden Ausführungsbeispiele der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein drehbares Getriebeteil mit einer Ausnehmung in einer Stirnfläche zur Aufnahme von Schmiermittel aus einem Aufnahmebereich,
- FIG 2: und
- FIG 3: unterschiedliche Rotationslagen des Getriebeteils gemäß FIG 1,
- FIG 4: das Getriebeteil gemäß FIG 1 in einer Position zur Abgabe des mittels der Ausnehmung aufgenommenen Schmiermittels in einem Abgabebereich direkt am drehenden Getriebeteil, nämlich im Innern des drehenden Getriebeteils,
- FIG 5: eine weitere Ausführungsform eines drehbaren Getriebeteils mit einer Ausnehmung zur Aufnahme von Schmiermittel aus einem Aufnahmebereich, wobei die Ausnehmung in einer Mantelfläche des Getriebeteils gebildet ist,
- FIG 6: eine Ausschnittsvergrößerung der Darstellung in FIG 5,
- FIG 7: das Getriebeteil gemäß FIG 5 in einer Position zur Abgabe des mittels der Ausnehmung aufgenommenen Schmiermittels und
- FIG 8: das Getriebeteil gemäß FIG 5 mit einem mittels eines von der Ausnehmung abgehenden Kanals zugänglich gemachten Abgabebereich direkt am drehenden Getriebeteil, durch den das Schmiermittel unter Gravitationseinfluss aus der Ausnehmung austritt.

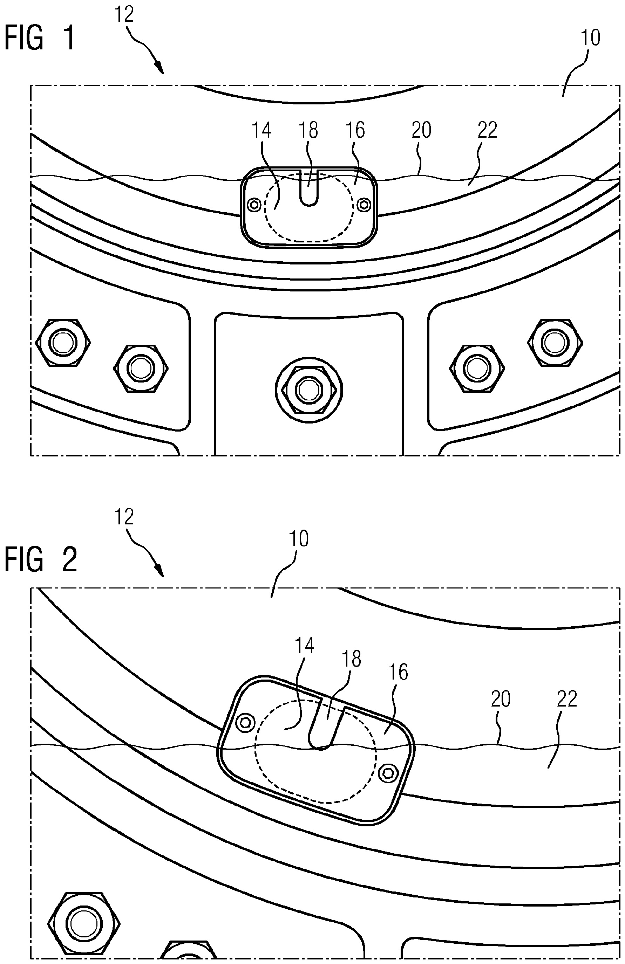

Die Darstellung in FIG 1 zeigt als Beispiel für ein drehbares Teil 10 eines Getriebes (Getriebeteil) und ohne Verzicht auf eine weitergehende Allgemeingültigkeit einen Abschnitt eines Planetenträgers 10 eines selbst nicht weiter gezeigten, an sich bekannten Planetengetriebes 12.

Der Planetenträger 10 ist in einer Draufsicht auf eine von dessen Stirnflächen (eine der beiden üblicherweise parallelen Seitenflächen des Planetenträgers 10) gezeigt.

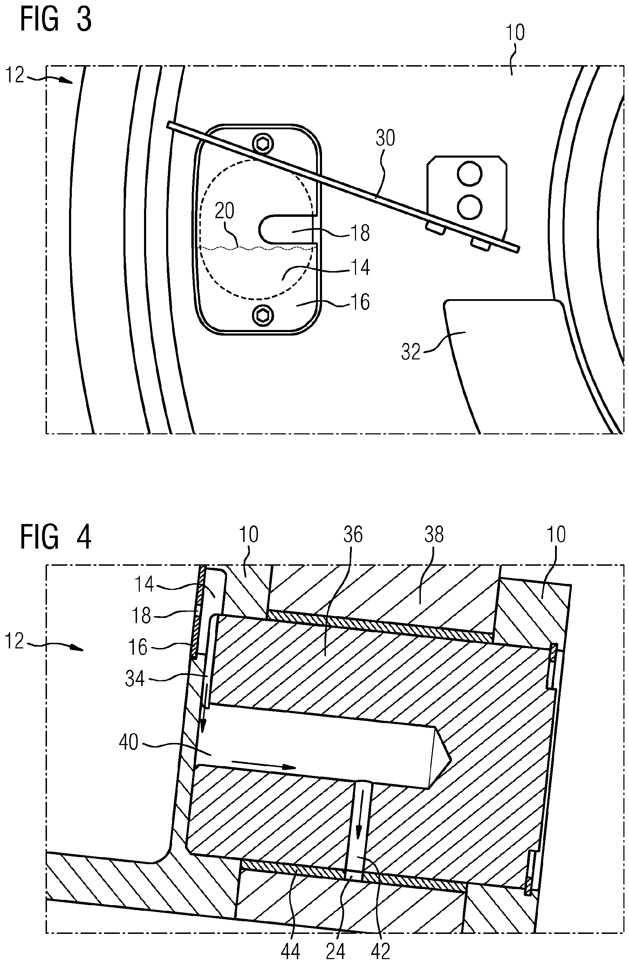

Der Planetenträger 10 als drehbares Teil des Planetengetriebes 12 weist in Form einer Ausnehmung 14 sowie einer die Ausnehmung 14 abdeckenden Deckplatte 16 mit einer darin gebildeten Öffnung 18 Mittel zur Aufnahme von Schmiermittel 20 aus einem Aufnahmebereich 22 und zur Abgabe des aufgenommenen Schmiermittels 20 in einem Abgabebereich 24 (FIG 4) im Innern des drehbaren Planetenträgers 10, insbesondere zur Abgabe an einem Planetenlager 44, auf.

In den Darstellungen in FIG 1, FIG 2 und FIG 3 ist die Ausnehmung 14 im Planetenträger 10 durch die Deckplatte 16 verdeckt. Das Schmiermittel 20 wird durch einen in Form einer horizontalen Linie gezeigten Flüssigkeitsspiegel dargestellt.

Bei der in FIG 1 gezeigten "6-Uhr-Position" des Planetenträgers 10 befindet sich die Ausnehmung 14 im Planetenträger 10 an der tiefsten Stelle und taucht entsprechend am weitesten in das zum Beispiel in einem als Ölsumpf fungierenden Abschnitt des Getriebegehäuses vorgehaltene Schmiermittel 20 ein. Über die Öffnung 18 dringt Schmiermittel 20 in die Ausnehmung 14 ein und die Ausnehmung 14 ist damit zumindest zunächst mit Schmiermittel 20 gefüllt.

In der Darstellung in FIG 2 ist eine Momentaufnahme beim Weiterdrehen des Planetenträgers 10 aus der in FIG 1 gezeigten "6-Uhr-Position" gezeigt. Gewählt ist dabei diejenige Position (Rotationslage des Planetenträgers 10), bei der die Öffnung 18 in der Deckplatte 16 gerade über das Niveau des Schmiermittels 20 hinaustritt. Zuvor (FIG 1) in die Ausnehmung 14 eingedrungenes Schmiermittel 20 läuft dabei über die Öffnung 18 aus der Ausnehmung 14 aus, wobei die Deckplatte 16 ein vollständiges Auslaufen des Schmiermittels 20 aus der Ausnehmung 14 verhindert, indem die Fläche der Öffnung 18 kleiner als die Grundfläche der Ausnehmung 14 ist.

In der Darstellung in FIG 3 ist eine Momentaufnahme beim weiteren Weiterdrehen des Planetenträgers 10 gezeigt. Der Planetenträger 10 befindet sich jetzt in einer "9-Uhr-Position"und das in der Ausnehmung 14 mittels der Deckplatte 16 zurückgehaltene Schmiermittel 20 steht dort bis gerade unter die jetzt horizontal orientierte Öffnung 18 an. Jedenfalls ist die Deckplatte 16 noch zum Zurückhalten des Schmiermittels 20 im Innern der Ausnehmung 14 wirksam.

In der Darstellung in FIG 3 ist ein Ölabstreifer 30 gezeigt, der nicht mit dem Planetenträger 10 dreht und zum Beispiel drehfest am Getriebegehäuse angebracht ist. Der Ölabstreifer 30 streicht in an sich bekannter Art und Weise über einen Abschnitt der Stirnfläche des Planetenträgers 10 und dabei aufgenommenes Schmiermittel 20 läuft entlang des Ölabstreifers 30 in Richtung auf einen Aufnahmebehälter 32. Mittels der Darstellung des Ölabstreifers 30 soll gezeigt werden, dass die Ausnehmung 14 und deren Deckplatte 16 die Verwendung solcher oder ähnlicher Mittel zur Aufnahme und zur Weiterleitung von Schmiermittel 20 nicht behindert und nicht ausschließt.

In der Darstellung in FIG 4 ist ein Schnitt durch den Planetenträger 10 gemäß FIG 1 bis FIG 3 entlang von dessen Drehachse gezeigt. Die Drehachse des Planetenträgers 10 ist gegenüber der Horizontalen geneigt. Die Ausnehmung 14 und deren Deckplatte 16 sind in der Darstellung links oben erkennbar. An die Ausnehmung 14 schließt im Innern des Planetenträgers 10 ein Kanal 34 an, über den das beim Drehen des Planetenträgers 10 mittels der Ausnehmung 14 aufgenommene Schmiermittel 20 im Innern des Planetenträgers 10 in Richtung auf den Abgabebereich 24 abfließen kann. Bei der gezeigten Ausführungsform verläuft der Weg des Schmiermittels 20 von der Ausnehmung 14 bis zum Abgabebereich 24 über einen ersten Kanal 34 in einem Grenzbereich zwischen dem Planetenträger 10 und einer im Planetenträger 10 montierten Planetenachse 36, sodann über eine als Kanal fungierende axiale Bohrung 40 in der Planetenachse 36 und von dort zu einem weiterführenden Kanal 42 in Richtung auf ein Lager 44 und ist dort zur Schmierung der Lagerung des Planetenrads 38 wirksam. Der resultierende Schmiermittelfluss ist in der Darstellung in FIG 4 mittels der im Bereich der Kanäle 34, 42 sowie der Bohrung 40 gezeigten Pfeile veranschaulicht.

Die Ausnehmung 14 ist zum Beispiel in eine Stirnfläche des drehbaren Getriebeteils 10, bei der gezeigten Ausführungsform in eine der Stirnflächen des Planetenträgers 10, gefräst oder durch eine sonstige spanabhebende Bearbeitung gebildet.

Die Öffnung 18 befindet sich in Umfangsrichtung des drehbaren Getriebeteils 10, bei der gezeigten Ausführungsform in Umfangsrichtung des Planetenträgers 10, mittig in der Deckplatte 16 und ist mit ihrer größten Längsachse in Richtung auf die Drehachse ausgerichtet (radiale Ausrichtung). Die Öffnung 18 befindet sich darüber hinaus in dem der Drehachse zugewandten Oberflächenabschnitt der Deckplatte 16 (proximal zur Drehachse). Die mittige Platzierung der Öffnung 18 gewährleistet zusammen mit der radialen Ausrichtung eine drehrichtungsunabhängige Schmiermittelaufnahme mittels der Ausnehmung 14. Die zur Drehachse proximale Platzierung der Öffnung 18 in der Deckplatte 16 gewährleistet einen Weitertransport zumindest eines Teils der mittels der Ausnehmung 14 aufgenommenen Schmiermittelmenge beim Weiterdrehen des jeweiligen drehbaren Getriebeteils 10.

Der Kanal 34 schließt im Innern der Ausnehmung 14 in dessen Bodenbereich an dieser an. Der Bodenbereich der Ausnehmung 14 ist der der Deckplatte 16 gegenüberliegende Flächenabschnitt der Ausnehmung 14. Allgemein kann formuliert werden, dass der im Innern der Ausnehmung 14 von dieser abgehende, zum Abgabebereich 24 mittelbar oder unmittelbar weiterführende Kanal 34 in einem der Drehachse des drehbaren Getriebeteils 10 zugewandten Bereich des Ausnehmung 14 beginnt, also in einem von der Drehachse minimal beabstandeten Bereich der Ausnehmung 14.

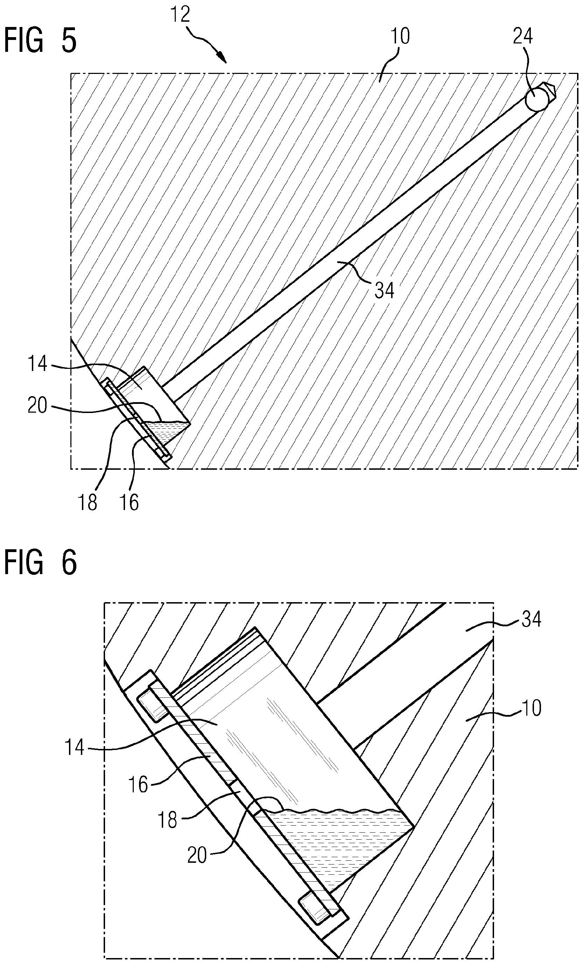

Die Darstellungen in FIG 5, FIG 6, FIG 7 und FIG 8 zeigen eine alternative Ausführungsform eines Planetengetriebes 12 und eines davon umfassten drehbaren Getriebeteils 10 gemäß dem hier vorgeschlagenen Ansatz. Als Beispiel für ein drehbares Getriebeteil 10 ist erneut - allerdings ausdrücklich ohne Verzicht auf eine weitergehende Allgemeingültigkeit - ein jeweils nur teilweise gezeigter Planetenträger 10 gewählt.

Bei dieser Ausführungsform befindet sich die Ausnehmung 14 in einer Mantelfläche des jeweiligen drehbaren Getriebeteils 10, bei der dargestellten Situation in einer Mantelfläche des Planetenträgers 10. Die Funktion der auch hier mittels einer Deckplatte 16 abgedeckten Ausnehmung 14 entspricht der oben bereits erläuterten Funktion. Die Deckplatte 16 weist eine insbesondere in Umfangsrichtung des Planetenträgers 10 mittig in der Deckplatte 16 platzierte Öffnung 18 auf, wobei eine Fläche der Öffnung 18 kleiner als die Grundfläche der Ausnehmung 14 ist. Bei einer mittig in der Deckplatte 16 platzierten Öffnung 18 ist die Aufnahme von Schmiermittel 20 mittels der Ausnehmung 14 unabhängig von der jeweiligen Drehrichtung des Planetenträgers 10.

Bei der in FIG 5 gezeigten Position (Rotationslage) des Planetenträgers 10, der in FIG 5, FIG 6 und FIG 7 geschnitten mit einer Schnittebene quer zur Drehachse und durch eine Wange des Planetenträgers 10 gezeigt ist, ist mittels der Ausnehmung 14 bereits in einem Aufnahmebereich 22 eine gewisse Schmiermittelmenge aufgenommen worden und in der Ausnehmung 14 befindliches Schmiermittel 20 wird mittels der Deckplatte 16 zurückgehalten. Das Schmiermittel 20 steht in der Ausnehmung 14 bis gerade an die Unterkante der Öffnung 18 in der Deckplatte 16 an.

Eine "6-Uhr-Position" wie in FIG 1 ist für diese Ausführungsform nicht gezeigt. Die Aufnahme des Schmiermittels 20 mittels der Ausnehmung 14 durch die Öffnung 18 in der Deckplatte 16 bei einer im Aufnahmebereich 22 in die dort vorgehaltene Schmiermittelmenge eintauchenden Ausnehmung 14 entspricht jedoch der in FIG 1 gezeigten Situation, so dass hier auf diese und die zugehörige Beschreibung verwiesen werden kann.

Die Darstellung in FIG 6 zeigt einen vergrößerten Ausschnitt aus der Darstellung in FIG 5 mit der in der Mantelfläche des Planetenträgers 10 zum Beispiel durch Fräsen oder dergleichen gebildeten Ausnehmung 14. Dort sind das Zurückhalten einer gewissen Schmiermittelmenge in der Ausnehmung 14 mittels der Deckplatte 16 und der bis zur Unterkante der Öffnung 18 in der Deckplatte 16 reichende Spiegel der in der Ausnehmung 14 zurückgehaltenen Schmiermittelmenge besser erkennbar.

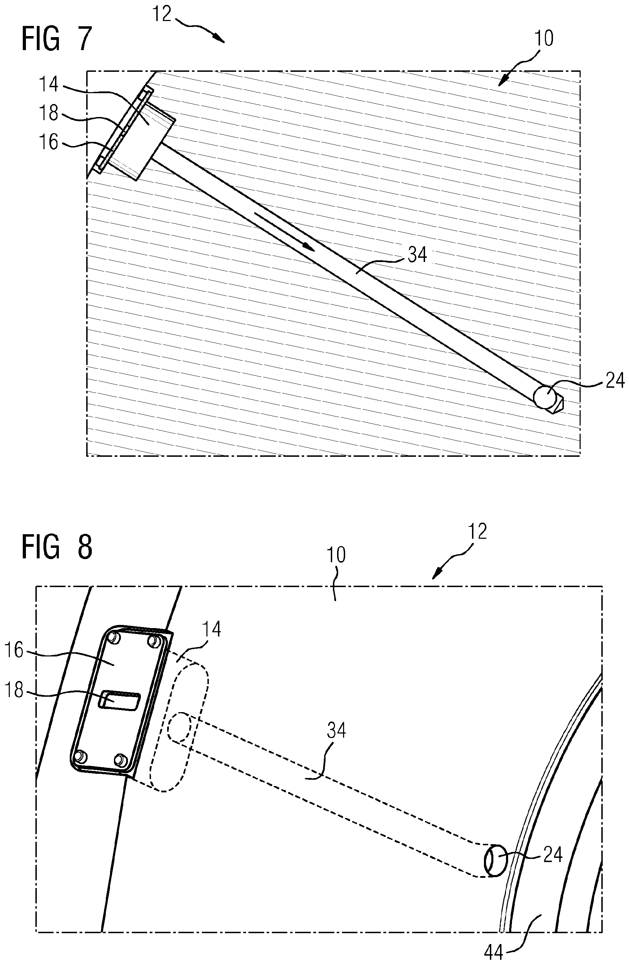

In der Darstellung in FIG 7 ist eine Position (Rotationslage) des Planetenträgers 10 gezeigt, bei der in der Ausnehmung 14 mittels der Deckplatte 16 zurückgehaltenes Schmiermittel 20 über den an die Ausnehmung 14 anschließenden Kanal 34 aus der Ausnehmung 14 in Richtung auf einen Abgabebereich 24 (FIG 8) abfließt.

In FIG 8 ist ein Abschnitt des Planetenträgers 10 gemäß FIG 5 bis FIG 7 in einer isometrischen Ansicht und mit teilweise sichtbar gemachten Konturen im Innern des Planetenträgers 10 dargestellt. In dieser Darstellung ist besonders gut die in Umfangsrichtung des Planetenträgers 10 mittige Platzierung der Öffnung 18 in der Deckplatte 16 erkennbar. Schmiermittel 20, das bei der Drehung des Planetenträgers 10 durch den Aufnahmebereich 22 durch diese Öffnung 18 in die Ausnehmung 14 eingedrungen ist, fließt beim Weiterdrehen des Planetenträgers 10, also etwa bei der in FIG 8 gezeigten Position des Planetenträgers 10, über den an die Ausnehmung 14 anschließenden Kanal 34 aus der Ausnehmung 14 ab und gelangt zu einem Abgabebereich 24 seitlich am Planetenträger 10, zum Beispiel zu einem Lager 44 des Planetenträgers 10. Dort ist das Schmiermittel 20 zur Schmierung der Lagerung wirksam.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Planetengetriebe 12 mit zumindest einem drehbaren Teil 10 und dem drehbaren Teil 10 zugeordneten Mitteln 14, 16, 18 zur Aufnahme von Schmiermittel 20 aus einem Aufnahmebereich 22 und zur Abgabe des aufgenommenen Schmiermittels 20 in einem Abgabebereich 24 direkt am jeweiligen drehbaren Teil 10, wobei als Mittel 14, 16, 18 zur Aufnahme des Schmiermittels 20 eine mittels einer Deckplatte 16 abgedeckte Ausnehmung 14 in dem drehbaren Teil 10 fungiert, wobei die Ausnehmung 14 über eine Öffnung 18 in der Deckplatte 16 nach außen offen ist und wobei eine Fläche der Öffnung 18 kleiner als eine Grundfläche der Ausnehmung 14 ist, sowie eine Windkraftanlage mit einem solchen Planetengetriebe 12 und ein Verfahren zum Betrieb eines solchen Planetengetriebes 12. Der Abgabebereich 24 befindet sich also gemäß der hier vorgestellten Neuerung direkt am drehenden System, also an demjenigen drehenden Teil 10, das auch zur Förderung des Schmiermittels 20 wirksam ist. Grundsätzlich kommt die Erfindung auch für andere Getriebeformen und für Anwendungsfälle über eine Verwendung in einer Windkraftanlage hinaus in Betracht.

## Patentansprüche

1. Planetengetriebe (12) mit zumindest einem drehbaren Teil (10) und dem drehbaren Teil (10) zugeordneten Mitteln (14, 16, 18) zur Aufnahme von Schmiermittel (20) aus einem Aufnahmebereich (22) und zur Abgabe des aufgenommenen Schmiermittels (20) in einem Abgabebereich (24),
**gekennzeichnet durch**
einen Abgabebereich (24) am drehbaren Teil (10),
wobei als Mittel (14, 16, 18) zur Aufnahme des Schmiermittels (20) eine mittels einer Deckplatte (16) abgedeckte Ausnehmung (14) in dem drehbaren Teil (10) fungiert,
wobei die Ausnehmung (14) über eine Öffnung (18) in der Deckplatte (16) nach außen offen ist und
wobei eine Fläche der Öffnung (18) kleiner als eine Grundfläche der Ausnehmung (14) ist.

2. Planetengetriebe (12) nach Anspruch 1, wobei die Ausnehmung (14) in einer Stirnfläche des drehbaren Getriebeteils (10) gebildet ist.

3. Planetengetriebe (12) nach Anspruch 2,
mit einer in Umfangsrichtung des drehbaren Getriebeteils (10) mittig in der Deckplatte (16) und in radialer Richtung des drehbaren Getriebeteils (10) proximal zur Drehachse des drehbaren Getriebeteils (10) platzierten Öffnung (18) sowie
mit einem im Innern der Ausnehmung (14) von dieser abgehenden, zum Abgabebereich (24) weiterführenden Kanal (34) in einem zur Drehachse des drehbaren Getriebeteils (10) minimal beabstandeten Bereich der Ausnehmung (14).

4. Planetengetriebe (12) nach Anspruch 1, wobei die Ausnehmung (14) in einer Mantelfläche des drehbaren Getriebeteils (10) gebildet ist.

5. Planetengetriebe (12) nach Anspruch 4,
mit einer in Umfangsrichtung mittig in der Deckplatte (16) platzierten Öffnung (18).

6. Windkraftanlage mit einem Planetengetriebe (12) nach einem der Ansprüche 1 bis 5.

7. Verfahren zum Betrieb eines Planetengetriebes (12) nach einem der Ansprüche 1 bis 5,
wobei das drehbare Getriebeteil (10) rotierend abschnittsweise in ein Schmiermittelreservoir im Aufnahmebereich (22) eintaucht,
wobei mit dem Eintauchen in das Schmiermittelreservoir Schmiermittel (20) durch die Öffnung (18) in der Deckplatte (16) in das Innere der Ausnehmung (14) im Getriebeteil (10) eintritt,
wobei beim anfänglichen Weiterdrehen des Getriebeteils (10) zumindest ein Teil des in das Innere der Ausnehmung (14) eingetretenen Schmiermittels mittels der Deckplatte (16) in der Ausnehmung (14) gehalten wird und
wobei beim weiteren Weiterdrehen des Getriebeteils (10) zumindest ein Teil der in der Ausnehmung (14) gehaltenen Schmiermittelmenge in einen von der Ausnehmung (14) abgehenden, zum Abgabebereich (24) weiterführenden Kanal (34) eintritt.
